# EUROPEAN PATENT SPECIFICATION

(11) **EP 1 584 549 B1**
(45) Date of publication and mention of the grant of the patent: **03.01.2007**
(21) Application number: 03768209.3
(22) Date of filing: 25.12.2003
(51) Int. Cl.: B62K 11/10, B62K 19/06, B62M 7/12

(54) **FRAME STRUCTURE FOR SCOOTER-TYPE VEHICLE**
RAHMENKONSTRUKTION FÜR SCOOTER-FAHRZEUG
STRUCTURE DE CADRE D'UN VEHICULE DE TYPE SCOOTER

(30) Priority: 17.01.2003 JP 2003009101
(43) Date of publication of application: 12.10.2005
(73) Proprietor: HONDA MOTOR CO., Ltd., Tokyo 107-8556 (JP)
(72) Inventor: NUMATA, Hidehiko, c/o Kabushiki Kaisha Honda, Wako-shi, Saitama 351-8555 (JP); SHIRAKI, Katsuhiko, c/o Kabushiki Kaisha Honda, Wako-shi, Saitama 351-8555 (JP); KAWAMOTO, Shuichi, c/o Kabushiki Kaisha Honda, Wako-shi, Saitama 351-8555 (JP)
(74) Representative: Intes, Didier Gérard André
(86) International application number: PCT/JP2003/016674
(87) International publication number: WO 2004/065199

(56) References cited:
- EP-A- 0 581 318
- JP-A- 3 132 492
- JP-U- 62 036 976
- JP-U- 64 048 395
- PATENT ABSTRACTS OF JAPAN vol. 014, no. 410 (M-1020), 5 September 1990 (1990-09-05) & JP 02 158468 A (Y II C:KK), 18 June 1990 (1990-06-18)

## Description

### Technical Field

The present invention relates to a scooter type vehicle frame structure wherein a low deck floor step is mounted to a body frame of the vehicle.

### Background Art

Such a scooter type vehicle frame structure is known from, for example, Japanese Patent No. 3006214. The known structure will now be discussed with reference to Fig. 9 hereof.

The conventional scooter type vehicle frame structure 310 includes a main pipe 312 extending rearwardly downwardly from a head pipe not shown. Left and right rear frames 313 are attached to a rear part of the main pipe 312 and extend rearwardly upwardly therefrom. An engine mount member 314 is attached to the rear part of the main pipe 312 and to front parts of the left and right rear frames 313. A floor supporting member 315 having a U-shaped cross-section extends from the engine mount member 314 in a lateral direction of a scooter type vehicle. A cross member 316 extends from the lower part of the main pipe 312 in the lateral direction of the vehicle. A side frame 317 lies between an end portion of the floor supporting member 315 and an end portion of the cross member 316. A floor step 318 is mounted on the side frame 317.

The floor supporting member 315 of the frame structure 310 has a portion welded to the engine mount member 314. This welded portion of the floor supporting member 315 provides such an adverse influence on the engine mount member 314 as to reduce the rigidity of the engine mount member 314. One may propose to, for example, increase the rigidity of the engine mount member 314 in order to reduce this adverse influence. In this case, however, the engine mount member 314 becomes heavier to increase the overall weight of the vehicle body.

Since the floor supporting member 315 is of U-shaped cross-section, the rigidity of the floor supporting member 315 is insufficient. If the rigidity of front and rear portions of the floor supporting member is increased, the vehicle body weight would be increased.

Thus, there is a need for a frame structure capable of increasing the rigidity of surroundings of the engine mount member 314 (hereinafter, referred to as "engine hanger bracket") without increasing the vehicle body weight.

### Disclosure of the Invention

According to the present invention, there is provided a frame structure for a scooter type vehicle, comprising: a head pipe; a main pipe extending downwardly and rearwardly from the head pipe to an intermediate part of the main pipe and extending substantially horizontally from the intermediate part; left and right rear frames extending upward and rearwardly from a rear part of the main pipe; a first cross pipe coupled to a rear end of the main pipe; engine hanger brackets attached to opposite ends of the first cross pipe by welding; and floor supporting frames each welded to a respective one of said engine hanger brackets in a welding zone located within an area delimited on said bracket by the outer periphery of the first cross pipe.

The first cross pipe is coupled to the rear end of the main pipe and the engine hanger bracket is welded to the outer periphery of this first cross pipe to thereby provide an increased rigidity within the range of welding. As a result, the weight of the engine hanger bracket can be reduced.

Further, since the floor supporting frame is welded to the engine hanger bracket within the range of welding at the outer periphery of the first cross pipe, there is no possibility that the rigidity of the engine hanger bracket provided in the outside of the range of welding at the outer periphery of the first cross pipe is affected. Therefore, the rigidity of the engine hanger bracket can be increased.

Preferably, the frame structure for a scooter type vehicle further comprises a second cross pipe disposed between and connected to front parts of the left and right rear frames, and left and right longitudinal coupling members each disposed between and connected to the first cross pipe and the second cross pipe.

The front parts of the left and right rear frames are connected together by the second cross pipe disposed therebetween, and the longitudinal coupling members are disposed between the second cross pipe and the first cross pipe, whereby efficient reinforcement of surroundings of the engine hanger bracket can be achieved. As a result, an increase in the vehicle body weight can be minimized.

Preferably, the floor supporting frame has an installation area to be installed to the engine hanger bracket, and the installation area is formed in a pipe shape.

Using a pipe of high flexural rigidity put on the market makes it possible to improve the rigidity of the floor supporting frame and to reduce the cost of the floor supporting frame.

### Brief Description of Drawings

A certain preferred embodiment of the present invention will hereinafter be described in detail, by way of example only, with reference to the accompanying drawings, in which:
Fig. 1 is a left side view showing a scooter type vehicle including a frame structure according to the present invention;
Fig. 2 is a cross-sectional view taken along line 2-2 of Fig. 1;
Fig. 3 is a detail cross-sectional view of a swing type power unit as shown in Fig. 1 including an engine and a transmission mechanism;
Fig. 4 is a perspective view of the frame structure according to the present invention;
Fig. 5 is a plan view of the frame structure as shown in Fig. 4;
Fig. 6 is a side view of the frame structure as shown in Fig. 4;
Fig. 7 is a plan view of the frame structure according to the present invention, showing partly in cross-section how a first cross pipe and a floor supporting frame of the frame structure are connected to each other;
Fig. 8 is a side view of the frame structure as shown in Fig. 7; and

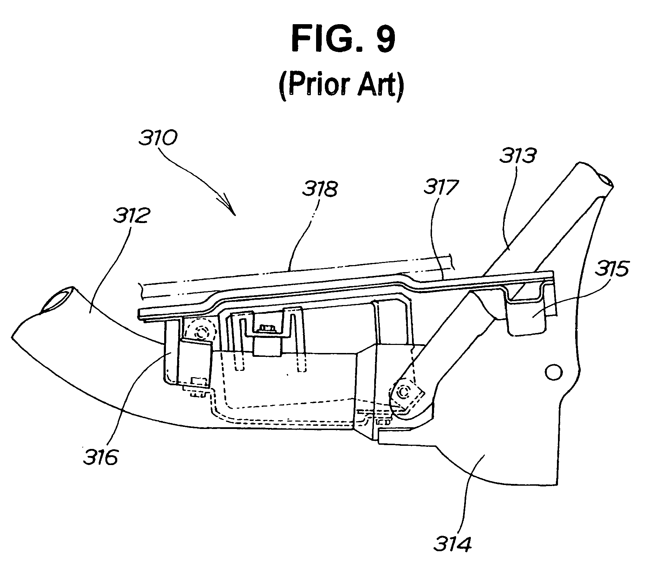

Fig. 9 is a conventional frame structure for a scooter type vehicle.

### Best Mode for Carrying Out the Invention

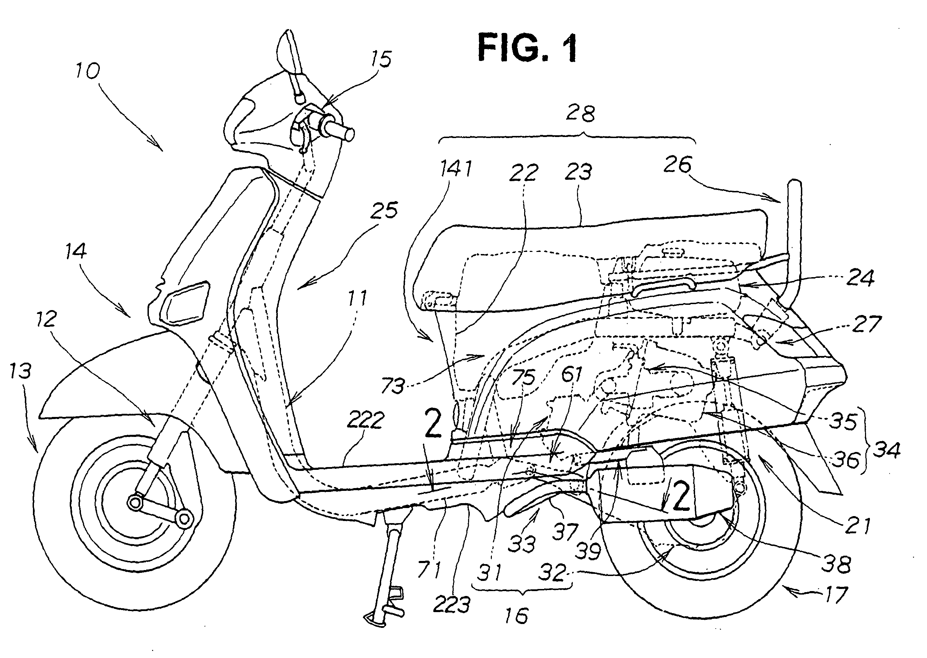

As shown in Fig. 1, a scooter type vehicle 10 mainly has a vehicle body frame 11, a front fork 12 attached to a front part of the vehicle body frame 11, a front wheel 13, a front fender 14 and handlebars 15 attached to the front fork 12, a swing type power unit 16 attached to a lower part of the body frame 11, a rear wheel 17 attached to a rear part of the power unit 16, a rear suspension 21 suspending the power unit 16, a luggage box 22 disposed at the center of the vehicle body frame 11, a seat 23 arranged on an upper part of the luggage box 22, a fuel tank 24 mounted on an upper part of the vehicle body frame 11, a body cover 25 covering the vehicle body frame 11, and a rear grip 26 provided in a rear part of the vehicle 10. Reference numeral 27 designates a hinge attached to a rear part of the vehicle body frame 11; and 28, a body cover unit. The vehicle body cover (body cover) 25 is made of iron plate, but may be made of resin.

The power unit 16 has an engine (four-stroke engine) 31 and a transmission mechanism 32. The engine 31 is equipped with an exhaust system 33, a carburetor 35 of an intake system 34 and an air cleaner 36.

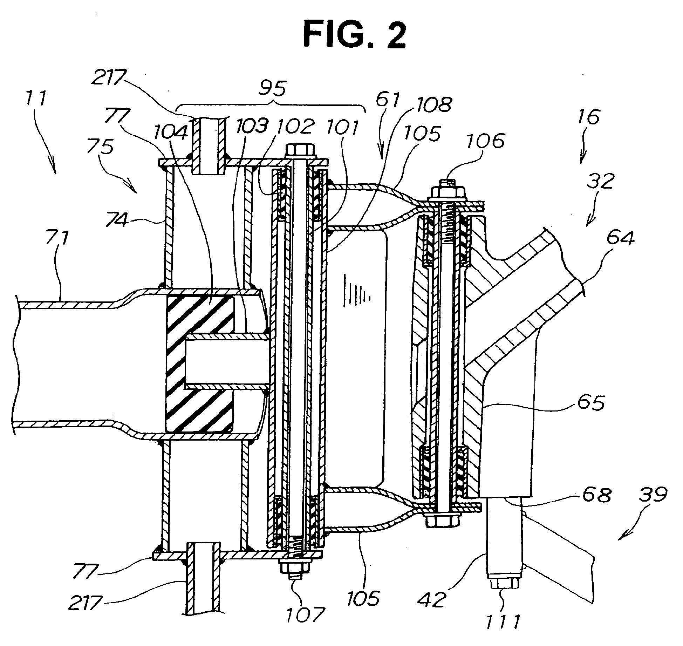

The exhaust system 33 includes an exhaust pipe 37 attached to the engine 31, and a muffler 38 integral with or connected to the exhaust pipe 37, and the muffler 38 is fixed to a muffler stay 39 secured to the power unit 16 as will be discussed again with reference to Fig. 2.

Reference numeral 61 designates a suspension link; 71, a main pipe; 73, a rear frame; 75, a link coupling member; 141, a rear cover; 222, a floor panel; and 223, an under cover disposed at a lower part of the vehicle body frame 11 for acting as a fender.

Fig. 2 shows in cross section the suspension link 61 and the link coupling member 75. Referring to Fig. 2, the suspension link 61 includes a shock absorbing member 95 and arms 105, 105 secured to the shock absorbing member 95. The shock absorbing member 95 includes an outer pipe 108, an inner pipe 101 inserted within the outer pipe 108 for supporting the outer pipe 108 through a rubber member 102, a fitting pipe 103 welded to a substantially lengthwise intermediate portion of the outer pipe 108, and a stopper rubber member 104 to which the fitting pipe 103 is fitted.

The arms 105, 105 of the suspension link 61 have proximal ends welded to the outer pipe 108 of the shock absorbing member 95 and distal ends connected to an engine supporting portion 65 of a crankcase 64 of the power unit 16 by means of a first bolt 106. The shock absorbing member 95 is connected to engine hanger brackets 77, 77 of the link coupling member 75 of the vehicle body frame 11 through a second bolt 107. The fitting pipe 103 is fitted into the main pipe 71 with the stopper rubber member 104 interposed therebetween.

The sequence for attachment of the power unit 16 to the vehicle body frame 11 through the suspension link 61 is not limited to a particular one.

The muffler stay 39 is secured to the power unit 16 with a lower mounting part 42 of the stay 39 attached via a bolt 111 to a seat portion 68 located at the engine supporting portion 65 of the crankcase 64 of the power unit 16.

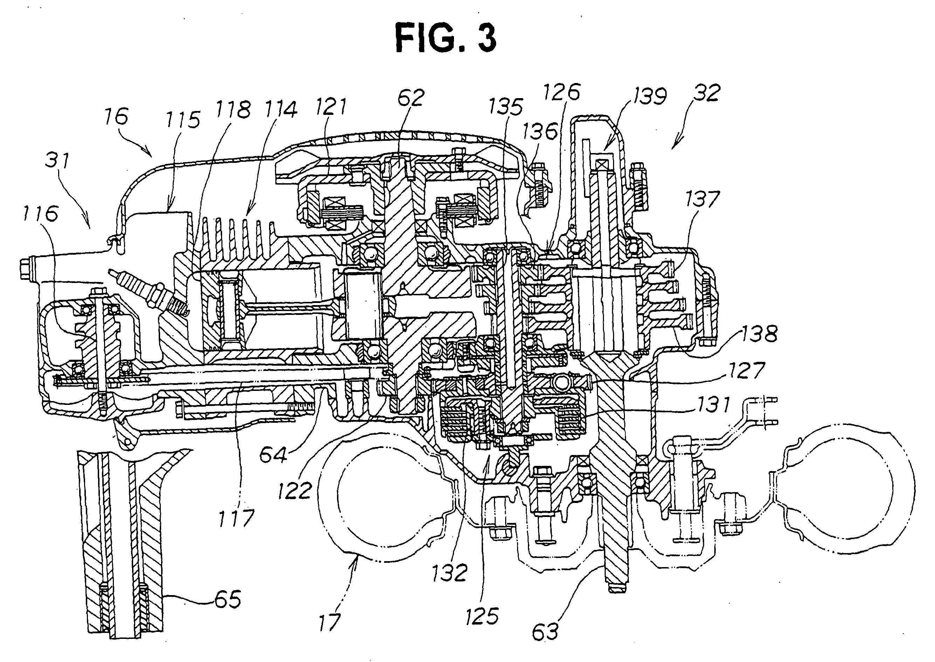

Fig. 3 shows the engine 31 and the transmission mechanism 32 of the power unit 16. The engine 31 is a four-stroke engine, and has a cylinder block 114, a cylinder head 115, a camshaft 116, a cam chain 117, a piston 118, a crankshaft 62, an alternator (ACG) 121, a primary drive gear 122 and a crankcase 64.

The transmission mechanism 32 comprises a clutch 125 and a transmission 126. The clutch 125 has a primary driven gear 127 meshing with the primary drive gear 122, a clutch disk 131 and a spring 132. The transmission 126 is of a four-speed return type, and has a main shaft 135 to which the clutch 125 is attached, a drive gear 136 provided on the main shaft 135, a driven gear 137 fitted in the drive shaft 63, and a shift mechanism 139 for fixing to the drive shaft 63 a desired gear (for example, a low gear 138) selected from the driven gear 137.

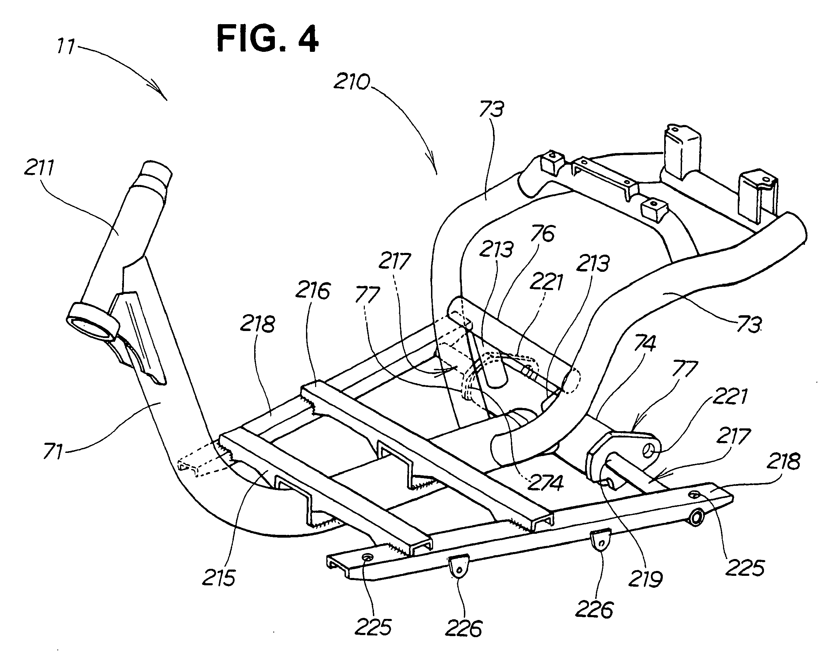

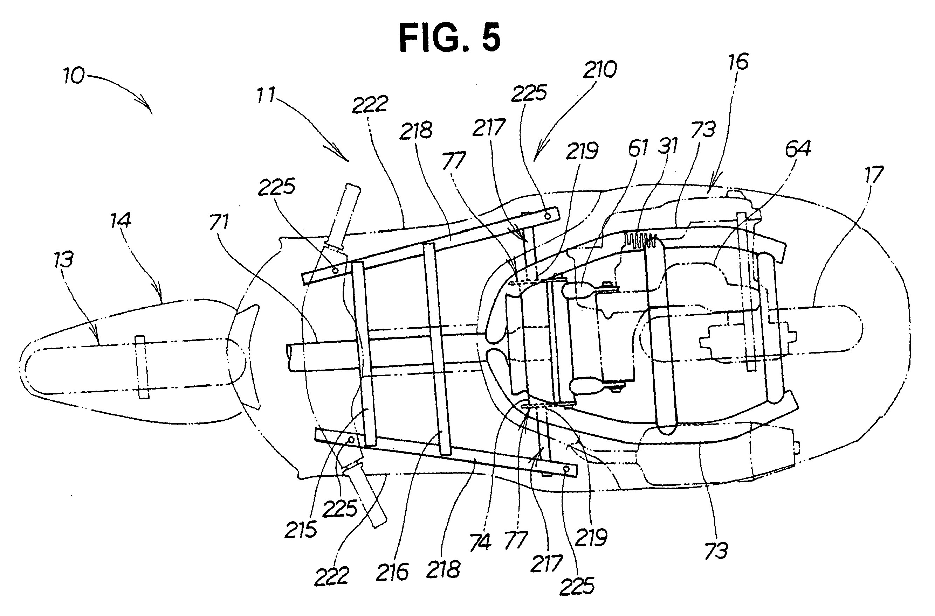

Fig. 4 shows a frame structure 210 for the scooter type vehicle 10, according to the present invention. The frame structure 210 for the scooter type vehicle 10 comprises a main pipe 71, left and right rear frames 73, 73, a first cross pipe 74, a second cross pipe 76, left and right engine hanger brackets 77, 77, one pair of longitudinal coupling members 213, 213, a front floor supporting member 215, an intermediate floor supporting member 216, left and right floor supporting frames 217, 217, and left and right side frames 218, 218. The main pipe 71 extends rearwardly downwardly from a head pipe 211 and then substantially horizontally rearwardly. The left and right rear frames 73, 73 have front ends secured to a rear portion of the main pipe 71 by welding and extend rearwardly upwardly from the rear portion of the main pipe 71. The first cross pipe 74 has an intermediate portion connected to a rear end of the main pipe 71. The second cross pipe 76 lies between and connected to the left and right rear frames 73, 73. The left and right engine hanger brackets 77, 77 are attached to left and right ends of the first cross pipe 74, respectively, by welding. The one pair of the longitudinal coupling members 213, 213 connect the first cross pipe 74 to the second cross pipe 76. The front floor supporting member 215 is attached to a front portion of a lower part of the main pipe 71 for supporting a floor panel 222 (see Fig. 5) as will be discussed later. The intermediate floor supporting member 216 is attached to an intermediate portion of the lower part of the main pipe 71 for supporting the floor panel 222. The left and right floor supporting frames 217, 217 are attached, by welding, to the left and right engine hanger brackets 77, 77, attached to the opposite ends of the first cross pipe 74, and within a range 274 of welding at an outer periphery of the first cross pipe 74 in order to support the floor panel 222. Each of the front supporting member 215 and the intermediate floor supporting member 216 has opposite ends secured to the left and right side frames 218, 218, respectively. The left floor supporting frame 217 is secured to the left side frame 218 at one end thereof opposite from the other end welded to the left engine hanger bracket 77. Similarly, the right floor supporting frame 217 is secured to the right side frame 218 at one end thereof opposite from the other end welded to the right engine hanger bracket 77.

The floor supporting frame 217 is a pipe or a member formed in a pipe shape. The floor supporting frame 217 has an installation area 219 to be installed to the engine hanger bracket 77. The engine hanger bracket 77 has a shaft hole (bolt hole) 221 for supporting the swing type power unit 16 (see Fig. 2) in such a manner as to allow the swing movement of the power unit 16. The left and right side frames 218, 218 has panel installation holes 255 for installing the floor panel 222 as shown in Fig. 1, and cover installation areas 226 for installing the under cover 223 as shown in Fig. 1.

As shown in Fig. 5, the left and right floor panels 222 are supported by the front floor supporting member 215, the intermediate floor supporting member 216, the left and right floor supporting frames 217, 217, and left and right side frames 218, 218.

The frame structure 210 for the scooter type vehicle 10 suspends the swing type power unit 16 in such a manner as to allow the swing movement of the power unit 16. The engine 31 is attached through the suspension link 61 to the rear end of the main pipe 71 in such a manner as to pivot together with the rear wheel 17.

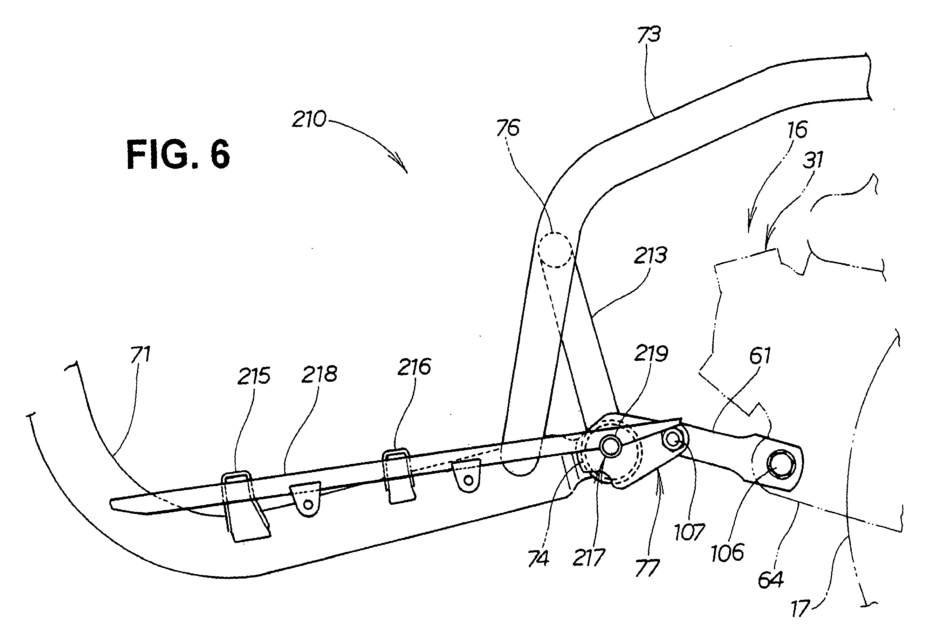

Referring to Fig. 6, as discussed hereinbefore, the first cross pipe 74 is coupled to the rear end of the main pipe 71. The engine hanger brackets 77, 77 are welded to the opposite ends of the first cross pipe 74. The engine 31 is supported on rear parts of the engine hanger brackets 77, 77. Within the range 274 of welding (See Fig. 4) at the outer periphery of the first cross pipe 74, the floor supporting frame 217 is attached to the engine hanger bracket 77 by welding.

The engine hanger bracket 77 is welded to the outer periphery of the first cross pipe 74 and hence has an increased rigidity within the range 274 of welding. As a result, the weight of the engine hanger bracket 77 can be reduced.

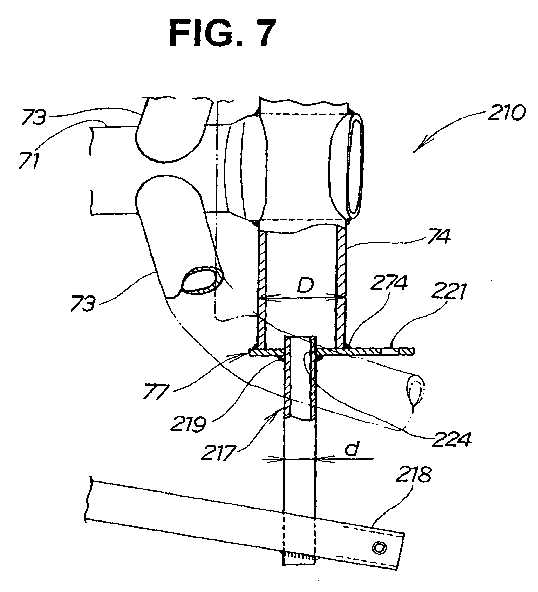

Further, since the floor supporting frame 217 is welded within the range 274 (see Fig. 7) of welding at the outer periphery of the first cross pipe 76, there is no possibility that the rigidity of the engine hanger bracket 77 provided in the outside of the range 274 of welding at the outer periphery of the first cross pipe 76 is affected. Therefore, the rigidity of the engine hanger bracket 77 can be improved.

As shown in Fig. 7, the hanger bracket 77 has an aperture 224 having substantially the same diameter as the floor supporting frame 217 within the range 274 of welding at the outer diameter of the first cross pipe 76. The floor supporting frame 217 is fitted into the aperture 224. The floor supporting frame 217 has an outer peripheral portion thereof welded to the hanger bracket 77. In other words, when an outer diameter of the first cross pipe 74 is assumed to be D and the outer diameter of the floor supporting frame 217 is assumed to be d (d being not bigger than D), the floor supporting frame 217 is welded within the range of the outer diameter D of the first cross pipe 74.

In other words, the floor supporting frame 217 is welded to the engine hanger bracket 77 and within the range 274 of welding at the outer periphery of the first cross pipe 74, whereby a force to be applied from the floor supporting frame 217 can be received within the range 274 of welding at the outer periphery of the first cross pipe 74. As a result, even if a force from the floor panel 222 (see Fig. 5) may be exerted on the engine hanger bracket 77, an influence to be given to a portion (neighborhood of the shaft hole 221) to be supported by the swing type engine unit 16 (see Fig. 6) can be minimized.

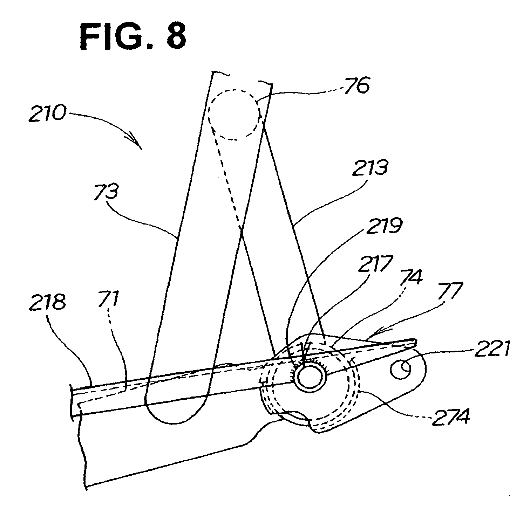

As shown in Fig. 4 and Fig. 8, the front parts of the left and right rear frames 73, 73 are connected together by the second cross pipe 76 disposed therebetween. The first cross pipe 74 and the second cross pipe 76 are connected to each other by the longitudinal coupling members 213, 213. Thus, efficient reinforcement of surroundings of the engine hanger bracket 77 can be achieved. As a result, an increase in the vehicle body weight can be minimized.

The floor supporting frame 217 is a member formed into a pipe shape, and therefore, the installation area 219 of the floor supporting frame 217 to be installed to the engine hanger bracket 77 is also of pipe shape.

Generally, a closed loop shape in cross-section is known to provide a high flexural rigidity or torsional rigidity and the pipe-shaped member is on the market for general purpose use. Thus, a pipe member is used as the floor supporting frame 217, whereby it is possible to improve the rigidity of the floor supporting frame 217 and to reduce the cost of the floor supporting frame 217.

In the embodiment, as shown in Fig. 1, the entire floor supporting frame 217 is in the form of a pipe, but the present invention is not limited thereto, but only the installation area 219 may take the form of a pipe.

### Industrial Applicability

The foregoing frame structure has a main pipe, a first cross pipe connected to a rear end of the main pipe, engine hanger brackets welded to opposite ends of the first cross pipe for supporting an engine, and left and right floor supporting frames for supporting a floor panel. Each floor supporting frame is welded to the engine hanger bracket within a range of welding where the first cross pipe is welded to the engine hanger bracket. With this simple arrangement, the engine hanger bracket and the floor supporting frames are reinforced to provide increased rigidity without increasing the vehicle body weight. The thus arranged frame structure is useful in a scooter type vehicle.

## Claims

1. A frame structure for a scooter type vehicle, comprising:
a head pipe (211);
a main pipe (71) extending downwardly and rearwardly from said head pipe (211) to an intermediate part of said main pipe (71) and extending substantially horizontally from the intermediate part;
left and right rear frames (73) extending upward and rearwardly from a rear part of said main pipe;
a first cross pipe (74) coupled to a rear end of said main pipe (71);
engine hanger brackets (77) welded to opposite ends of said first cross pipe (74); and
floor supporting frames (217) each welded to a respective one of said engine hanger brackets (77) in a welding zone located within an area delimited on said bracket (77) by the outer periphery of said first cross pipe (74).

2. The frame structure for a scooter type vehicle according to claim 1, further comprising a second cross pipe (76) disposed between and connected to front parts of said left and right rear frames (73), and left and right longitudinal coupling members (213) each disposed between and connected to said first cross pipe (74) and said second cross pipe (76).

3. The frame structure for a scooter type vehicle according to claim 1, wherein said floor supporting frame (217) has an installation area to be installed to said engine hanger bracket (77), and the installation area is formed in a pipe shape.

## Patentansprüche

1. Rahmenstruktur für ein Fahrzeug vom Motorrollertyp, umfassend:
ein Kopfrohr (211),
ein Hauptrohr (71), das sich nach unten und nach hinten von dem Kopfrohr (211) zu einem Mittelteil des Hauptrohres (71) erstreckt und sich im wesentlichen horizontal von dem Mittelteil erstreckt,
linke und rechte hintere Rahmen (73), die sich nach oben und nach hinten von dem hinteren Teil des Hauptrohres erstrecken,
ein erstes Querrohr (74), das verbunden ist mit dem hinteren Ende des Hauptrohres (71),
Motoraufhängungshalter (77), die an entgegengesetzte Enden des ersten Querrohrs (74) angeschweißt sind, und
Bodenträgerrahmen (217), von denen jeder an ein entsprechendes der Motoraufhängungshalter (77) in einer Schweißzone geschweißt sind, die in einem Bereich angeordnet ist, der auf dem Halter (77) durch den Außenumfang des ersten Querrohres (74) begrenzt ist.

2. Rahmenstruktur für ein Fahrzeug vom Motorrollertyp nach Anspruch 1, ferner umfassend ein zweites Querrohr (76), das angeordnet ist zwischen und verbunden ist mit vorderen Teilen der linken und rechten hinteren Rahmen (73) und linken und rechten Längsverbindungsteilen (213), die jeweils angeordnet sind zwischen und verbunden sind mit dem ersten Querrohr (74) und dem zweiten Querrohr (76).

3. Rahmenstruktur für ein Fahrzeug vom Motorrollertyp nach Anspruch 1, wobei der Bodenträgerrahmen (217) einen Montagebereich hat, der an dem Motoraufhängungshalter (77) anzubringen ist, wobei der Montagebereich in einer Rohrform ausgebildet ist.

## Revendications

1. Structure de cadre pour un véhicule de type scooter, comportant :
un tube de tête (211) ;
un tube principal (71) s'étendant vers le bas et vers l'arrière depuis ledit tube de tête (211) jusqu'à une partie intermédiaire dudit tube principal (71) et s'étendant de manière sensiblement horizontale depuis la partie intermédiaire ;
des cadres arrière gauche et droit (73) s'étendant vers le haut et vers l'arrière depuis une partie arrière dudit tube principal ;
un premier tube transversal (74) relié à une extrémité arrière dudit tube principal (71) ;
des supports de suspension de moteur (77) soudés sur des extrémités opposées dudit premier tube transversal (74) ; et
des cadres de support de plancher (217) soudés chacun sur un support respectif desdits supports de suspension de moteur (77) dans une zone de soudage située dans un secteur délimité sur ledit support (77) par la périphérie extérieure dudit premier tube transversal (74).

2. Structure de cadre pour un véhicule de type scooter selon la revendication 1, comportant en outre un deuxième tube transversal (76) disposé entre et relié aux parties avant desdits cadres arrière gauche et droit (73), et des éléments d'accouplement longitudinaux gauche et droit (213) disposés chacun entre et relié audit premier tube transversal (74) et audit deuxième tube transversal (76).

3. Structure de cadre pour un véhicule de type scooter selon la revendication 1, dans laquelle ledit cadre de support de plancher (217) a une zone d'installation devant être installée sur ledit support de suspension de moteur (77), et la zone d'installation est réalisée en forme de tube.
